# EUROPÄISCHE PATENTSCHRIFT

(11) **EP 2 276 685 B1**
(45) Veröffentlichungstag und Bekanntmachung des Hinweises auf die Patenterteilung: **11.12.2013**
(21) Anmeldenummer: 09749647.5
(22) Anmeldetag: 22.05.2009
(51) Int. Cl.: B65G 23/22, B65G 15/56

(54) **BANDFÖRDERER**
BELT CONVEYOR
TRANSPORTEUR À BANDE

(30) Priorität: 21.05.2008 DE 102008024508
(43) Veröffentlichungstag der Anmeldung: 26.01.2011
(73) Patentinhaber: Interroll Holding AG, 6592 Sant' Antonino (CH)
(72) Erfinder: KUHN, Michael, 74889 Sinsheim (DE)
(74) Vertreter: Müller-Boré & Partner Patentanwälte
(86) Internationale Anmeldenummer: PCT/EP2009/003641
(87) Internationale Veröffentlichungsnummer: WO 2009/141157

(56) Entgegenhaltungen:
- EP-A- 1 710 176
- EP-A1- 1 394 077
- EP-A1- 1 394 078
- DE-A1- 4 028 181
- DE-A1- 19 532 391
- DE-A1- 19 635 665
- DE-U1- 9 012 692
- GB-A- 2 316 380
- GB-A- 2 375 091
- US-A- 3 878 937
- US-A- 4 185 737
- US-A1- 2003 132 088

## Beschreibung

Die vorliegende Erfindung betrifft einen Bandförderer, ein Verfahren zum Montieren des Bandförderers sowie die Verwendung einer Antriebsvorrichtung für einen Bandförderer.

Bei einem Bandförderer bzw. Gurtbandförderer wird üblicherweise ein elastischer und/oder biegsamer Fördergurt umlaufend angetrieben, indem der Fördergurt um Umlenkwellen bzw. Umlenkrollen herumgeführt wird. Dabei wird zumindest eine Umlenkwelle motorisch angetrieben, so daß ein lasttragendes Obertrum des Fördergurts in einer Richtung läuft, während ein Untertrum auf einer Unterseite in die entgegengesetzte Richtung läuft. Der Fördergurt unterliegt einem Verschleiß und muß nach einer gewissen Zeit bzw. Betriebsstundenanzahl ausgewechselt werden. Der Austausch des Fördergurts gestaltet sich schwierig und zeitaufwendig, weil insbesondere im Falle eines Endlosgurts eine Vielzahl an Teilen des Bandförderers demontiert und anschließend wieder montiert werden muß.

EP 1 710 176 A2 offenbart einen Gurtförderer mit einem Endlos-Fördergurt und zumindest zwei Umlenkrollen und einem Antriebsmotor. Dabei ist der Antriebsmotor zwischen den beiden Umlenkrollen und mit Abstand zu diesen angeordnet.

DE 195 32 391 A1 offenbart eine Antriebseinheit für ein endloses Fördermittel eines Fördersystems, das ein Gehäuse aufweist, in dem eine Antriebswelle und Umlenkmittel für das Fördermittel gelagert sind.

US 3 878 937 offenbart ein Fördersystem mit einem Endlosriemen, bei dem Querstangen an Endplatten in unterschiedlichen parallelen Positionen montierbar sind und ein Motorlagerträger an den Querstangen in unterschiedlichen Positionen montiert werden kann.

US 2003/0132088 A1 offenbart ein Förderantriebssystem und ein motorintegriertes Reduktionsgetriebe hierfür, bei dem ein Förderriemen über eine Kette angetrieben ist.

GB 2 316 380 A offenbart ein Antriebsgerät für einen kompakten Riemenförderer, bei dem ein Antriebsrad über eine Gummifeder gestützt ist, um eine Außenfläche des Riemens zu kontaktieren.

DE 196 35 665 A1 offenbart eine Antriebsvorrichtung für einen kompakten Gurtförderer, die eine Antriebsrolle aufweist, welche mit der rücklaufenden, außenliegenden Gurtfläche des endlosen Riemens in Berührung steht.

DE 40 28 181 A1 offenbart einen Duplex-Förderer, bei dem in einem mittleren Abschnitt eine Halteplatte angeordnet ist, auf der Umlenkrollen zum Spannen von Fördergurten befestigt sind.

DE 90 12 692.0 U1 offenbart einen Duplex-Förderer, bei dem eine Antriebsvorrichtung unterhalb der Endlos-Fördergurte angeordnet ist, so dass sich deren Treibrolle unterhalb von miteinander gekoppelten Umlenkrollen befindet.

GB 2 375 091 A offenbart ein Verfahren zum Bilden eines Förderriemens mit einem eingreifenden Kantenelement, das Vorsprünge und Vertiefungen aufweist, die mit Vorsprüngen und Vertiefungen des Förderriemens in Eingriff gebracht werden und dann durch Aufbringen von Wärme und/oder einem Klebstoff dauerhaft verbunden werden.

Die Aufgabe der vorliegenden Erfindung besteht in der Schaffung eines Bandförderers, der eine sanfte und gleichmäßige Bewegung eines Fördergurts und gleichzeitig einen schnellen und einfachen Austausch des Fördergurts ermöglicht.

Diese Aufgabe wird durch einen Bandförderer, ein Verfahren sowie eine Verwendung gemäß den unabhängigen Ansprüchen gelöst. Vorteilhaft Weiterbildungen der Erfindung sind in den abhängigen Ansprüchen definiert.

Gemäß einem Aspekt der Erfindung hat der Bandförderer einen um zumindest eine Umlenkwelle geführten Fördergurt, um ein Obertrum und ein Untertrum zu bilden, und eine Antriebsvorrichtung zum Bewegen des Fördergurts, wobei die Antriebsvorrichtung getrennt bzw. separat von der Umlenkwelle angeordnet und/oder montiert bzw. befestigt ist und den Fördergurt (20) im Bereich einer Umlenkung zwischen Obertrum und Untertrum antreibt. In anderen Worten ist die Antriebsvorrichtung vorzugsweise vollständig getrennt von der Umlenkwelle an einem Gestell oder Montagerahmen montiert. Als ein Obertrum wird ein vertikal oberer Abschnitt des Fördergurts bezeichnet, auf dem die Waren oder Güter transportiert werden und der sich in Förderrichtung bewegt, während ein unterhalb entgegen der Förderrichtung zurücklaufender Abschnitt des Fördergurts als ein Untertrum bezeichnet wird. Vorzugsweise ist die Antriebsvorrichtung im Bereich der zumindest einen Umlenkwelle angeordnet.

Indem die Antriebsvorrichtung getrennt bzw. separat von der Umlenkwelle des Bandförderers angeordnet ist, ist eine Demontage/Montage der Antriebsvorrichtung beim Austausch des Fördergurts nicht erforderlich. Es ist vollkommen ausreichend, die Umlenkwelle zu demontieren, um einen neuen Fördergurt aufzuziehen. Die Antriebsvorrichtung hingegen kann während dem Austauschvorgang des Fördergurts in dem Gestell des Bandförderers montiert bleiben. Somit ist der Austausch des Fördergurts auf einfache Weise durchzuführen und demgemäß entstehen nur geringe Montagekosten beim Austausch des Fördergurts. Dabei umfaßt die Antriebsvorrichtung beispielsweise ein Zahnrad bzw. eine Keilriemenscheibe zum in Eingriff treten mit einem an dem Fördergurt angeordneten Zahnriemen bzw. Keilriemen sowie vorzugsweise einen Motor für ein maschinelles Antreiben des Zahnrads bzw. der Keilriemenscheibe, um über den Eingriff mit dem Zahnriemen bzw. Keilriemen den Fördergurt anzutreiben.

Als Motor wird vorzugsweise ein Elektromotor, wie beispielsweise in Wechselstrommotor oder ein Drehstrommotor verwendet. Es kann jedoch auch je nach Einsatzzweck jeder andere Motor wie beispielsweise ein Gleichstrommotor, ein Hydraulikmotor, ein Pneumatikmotor, Verbrennungsmotor oder dergleichen verwendet werden.

Vorzugsweise weist die Antriebsvorrichtung einen an einem Randabschnitt des Fördergurts angeordneten Zahnriemen bzw. Keilriemen und ein drehend antreibbares Zahnrad bzw. eine Keilriemenscheibe auf, das/die vorzugsweise mit einem Elektromotor gekoppelt ist. Weiter bevorzugt ist eine Achse des Zahnrads bzw. der Keilriemenscheibe im wesentlichen auf einer Verlängerung einer Achse der Umlenkwelle angeordnet.

Weiter bevorzugt ist die zumindest eine Umlenkwelle separat von dem Zahnrad bzw. der Keilriemenscheibe demontierbar. Vorzugsweise sind zwei Umlenkwellen, jeweils eine an einem Ende des Bandförderers angeordnet.

Gemäß der Erfindung weist die Umlenkwelle eine Vielzahl von nebeneinander angeordneten Walzenkörpern auf, die vorzugsweise unabhängig voneinander drehbar sind.

Indem die Umlenkwelle eine Vielzahl von nebeneinander angeordneten Walzenkörpern aufweist, die unabhängig voneinander drehbar sind, kann ein Geschwindigkeitsunterschied des Fördergurts in der Breitenrichtung insbesondere im Falle eines Kurvengurts auf bevorzugte Weise ausgeglichen werden. In anderen Worten hat bei einem Kurvengurt ein radial äußerer Abschnitt eine höhere Umlaufgeschwindigkeit als ein radial innerer Abschnitt und demgemäß müssen diese Abschnitte mit unterschiedlicher Geschwindigkeit um die Umlenkwelle herum bewegt bzw. geführt werden. Diese Geschwindigkeitsunterschiede können auf sanfte Weise dadurch realisiert werden, daß die nebeneinander angeordneten Walzenkörpern unabhängig voneinander drehbar sind.

Alternativ kann die Umlenkwelle jedoch auch einstückig und konisch ausgebildet sein, um Geschwindigkeitsunterschiede des Fördergurts auszugleichen.

Vorzugsweise ist die Umlenkwelle durch Einhängen in ein Gestell des Bandförderers anordenbar und/oder montierbar. Dabei ist die Umlenkwelle vorzugsweise zum Spannen des Fördergurts in einer Längsrichtung des Fördergurts verschiebbar und/oder fixierbar.

In dem die Umlenkwelle lediglich in das Gestell des Bandförderers eingehängt wird, ist eine Demontage/Montage der Umlenkwelle beim Austausch des Fördergurts auf einfache Weise und schnell durchzuführen. Darüber hinaus kann durch Verschieben der Umlenkwelle in einer Längsrichtung des Fördergurts der Fördergurt gespannt werden. Eine separate Spannvorrichtung zum Spannen des Fördergurts ist somit nicht erforderlich. Deshalb kann der Bandförderer mit einem Minimum an Einzelteilen hergestellt werden.

Vorzugsweise kann die eingehängte Umlenkwelle mittels einer vorgespannten Gasdruckfeder gespannt werden. Die Gasdruckfeder ist vorzugsweise so konfiguriert, daß sie in einer vollständig entspannten Stellung des Fördergurts, d.h. bei nach innen bzw. entgegen die Spannrichtung verlagerter Umlenkwelle selbsttätig einrastet bzw. arretiert wird. Durch diese Arretierung der Gasdruckfeder kann die Umlenkwelle leicht aus ihrer Lagerung ausgehängt werden, um den Fördergurt zu wechseln. Dabei ist die Arretierung vorzugsweise manuell lösbar, um das Spannen des Fördergurts nach der Montage einfach durch Lösen der Arretierung der Gasdruckfeder zu veranlassen.

Vorzugsweise ist die zumindest eine Umlenkwelle an zumindest einem Ende einer Gurtkurve anordenbar oder angeordnet. In anderen Worten ist der Bandförderer als ein Kurven-Bandförderer ausgebildet und die Umlenkwelle lenkt den Fördergurt nach unten um, um eine Verbindung zwischen vorlaufendem Obertrum und rücklaufendem Untertrum des Fördergurtes zur Verfügung zu stellen.

Gemäß einem weiteren Aspekt der Erfindung weist der Bandförderer einen um zumindest eine Umlenkwelle geführten Fördergurt und eine Antriebsvorrichtung zum Bewegen des Fördergurts, vorzugsweise nach einem oder mehreren der vorherigen Aspekte auf, wobei der Fördergurt einen Zahnriemen oder Keilriemen aufweist, der mit der Antriebsvorrichtung in Eingriff steht und lösbar mit dem Fördergurt verbunden oder verbindbar ist.

Indem des weiteren der Zahnriemen bzw. Keilriemen zum Antreiben des Fördergurts lösbar mit dem Fördergurt verbunden bzw. verbindbar ist, kann ein Zahnriemen bzw. Keilriemen oder ein Fördergurt getrennt ausgetauscht werden. Somit können die Kosten für den Austausch verschlissener Bauteile vermindert werden, weil je nach Verschleißzustand bzw. Abnützung der Zahnriemen bzw. Keilriemen ohne Fördergurt oder der Fördergurt ohne Zahnriemen bzw. Keilriemen ausgetauscht werden kann.

Vorzugsweise weist der Zahnriemen bzw. Keilriemen eine seitliche Erstreckung auf, die mit dem Fördergurt verbunden oder verbindbar ist.

Weiter bevorzugt weist die seitliche Erstreckung eine Vielzahl von Laschen auf, die durch Aussparungen voneinander getrennt sind und mit dem Fördergurt vorzugsweise durch Nieten verbindbar oder verbunden sind.

Die durch die Aussparungen voneinander getrennten Laschen bieten den Vorteil einer bevorzugten Kraftübertragung von dem Zahnriemen bzw. Keilriemen auf den Fördergurt bei gleichzeitiger in vorgegebenen Grenzen möglichen seitlichen oder winkligen Verschiebbarkeit des Zahnriemens bzw. Keilriemens gegenüber dem Fördergurt. Hierdurch können Bauabweichungen bzw. Toleranzen ausgeglichen werden, so daß selbst bei relativ hohen Toleranzen ein sanfter Betrieb des Bandförderers ermöglicht wird. Darüber hinaus können aufgrund verhältnismäßig hoher Toleranzen bei der Herstellung und Montage des Bandförderers die Herstellungskosten minimiert werden. Eine Ausbeute bei den gefertigten Bauteilen kann hingegen erhöht werden, weil bei den hohen Toleranzen nur eine geringe Ausschußmenge produziert wird.

Des weiteren kann sich der Fördergurt an den Umlenkungen zwischen den Laschen der seitlichen Erstreckung in die Aussparungen bzw. Täler hineinlegen, um Längsspannungen in der Umlenkung zu minimieren.

Schließlich sind bei der Montage des Bandförderers keine hohen Toleranzen bei der Justierung und Ausrichtung einzuhalten, wodurch die Montagezeit und Montagekosten minimiert werden können.

Indem des weiteren der Fördergurt mittels Nieten mit den Zahnriemen bzw. Keilriemen verbunden ist, kann der Zahnriemen bzw. Keilriemen auf einfache Weise von dem Fördergurt gelöst und mit einem anderen Fördergurt verbunden werden. Alternativ oder zusätzlich können jedoch auch andere Befestigungsmittel wie Schrauben, Splinte, Druckknöpfe etc. verwendet werden.

Vorzugsweise weist der Zahnriemen bzw. Keilriemen zumindest eine vorzugsweise in seinem Inneren angeordnete erste Zugträgerlage auf, die längs zu einer Bewegungsrichtung des Zahnriemens bzw. Keilriemens angeordnet ist.

Indem der Zahnriemen bzw. Keilriemen eine in Längsrichtung bzw. Bewegungsrichtung des Zahnriemens bzw. Keilriemens angeordnete erste Zugträgerlage, vorzugsweise ein Paar erster Zugträgerlagen aufweist, kann der Zahnriemen bzw. Keilriemen hohe Antriebskräfte übertragen. Darüber hinaus wird auch bei hoher Laufleistung eine Längung des Zahnriemens bzw. Keilriemens weitgehend vermieden. Somit gibt es auch nach vielen Betriebsstunden keine Störungen aufgrund einer veränderten Teilung bzw. eines veränderten Abstands von Zähnen des Zahnriemens bzw. Keilriemens und/oder eines Durchhängen eines unteren Trums des Zahnriemens bzw. Keilriemens.

Insbesondere im Fall eines Kurven-Bandförderers kann somit ein Blockieren einer Antriebsvorrichtung aufgrund einer Längung vermieden werden, wie beispielsweise bei der Verwendung einer Kette anstelle des Zahnriemens bzw. Keilriemesn auftreten könnte.

Weiter bevorzugt weist der Zahnriemen bzw. Keilriemen zumindest eine zweite Zugträgerlage auf, die vorzugsweise in einem Winkel von 30° bis 50° gegenüber der Bewegungsrichtung des Zahnriemens bzw. Keilriemen angeordnet ist.

Indem der Zahnriemen bzw. Keilriemen die zweite Zugträgerlage aufweist, die gegenüber der Bewegungsrichtung des Zahnriemens bzw. Keilriemen in einem Winkel von 30 bis 50 Grad angeordnet ist, können darüber hinaus hohe Kräfte von dem Zahnriemen bzw. Keilriemen auf den Fördergurt übertragen werden ohne die Laschen übermäßig zu deformieren. Darüber hinaus kann durch die winkelige Anordnung der zweiten Zugträgerlage ein Biegeverhalten des Zahnriemens bzw. Keilriemens beim Umlenken an dem Zahnrad bzw. der Keilriemenscheibe optimiert werden. In anderen Worten stört die verhältnismäßig steife zweite Zugträgerlage das Biegeverhalten des Zahnriemens bzw. Keilriemens nicht bzw. nur geringfügig, weil die zweite Zugträgerlage in einem Winkel zur Bewegungsrichtung des Zahnriemens bzw. Keilriemens angeordnet ist. Des weiteren stimmt die winkelige Lage der zweiten Zugträgerlage vorzugsweise mit einer Kraftlinie überein, die die Antriebskraft von dem Zahnriemen bzw. Keilriemen auf den Fördergurt überträgt. Dabei ist die zweite Zugträgerlage über die gesamte Länge des Zahnriemens bzw. Keilriemens winklig zu einer Erstreckung des Zahnriemens bzw. Keilriemens angeordnet.

Vorzugsweise erstreckt sich die zweite Zugträgerlage in die seitliche Erstreckung und/oder die Laschen hinein.

Weiter bevorzugt weist zumindest ein Zugträger aus der ersten und/oder zweiten Zugträgerlage zumindest eine Lage gewobene Kett- und Schußfäden auf. Am besten weist die erste Zugträgerlage ein Seil in Gleichschlag- oder Kreuzschlagausführung auf und die zweite Zugträgerlage weist bevorzugt zumindest eine Lage gewobene Kett- und Schußfäden auf.

Dabei weist der Zahnriemen bzw. Keilriemen vorzugsweise Polyurethan auf und ist vorzugsweise mit den ebenfalls Polyurethan aufweisenden Laschen und/oder der Erstreckung verschweißt und/oder verklebt. Der Zahnriemen bzw. Keilriemen kann jedoch auch einstückig mit der seitlichen Erstreckung bzw. den Laschen ausgebildet sein, um den Schritt des Verschweißens/Verklebens bei der Herstellung einzusparen.

Vorzugsweise ist der Fördergurt ein Endlosgurt. Somit kann ein Montageschritt des Verbindens von Gurtenden eingespart werden und ein Lösen einer Gurtverbindung während des Betriebs kann vermieden werden.

Gemäß einer weiteren Ausführungsform kann ein solcher Bandförderer eine Spannfläche aufweisen, die an dem Fördergurt oder an der seitlichen Erstreckung eine Spannfläche vorgesehen ist, die mit einem rahmenseitigen Spannglied in Kontakt steht, welches die Spannfläche mit einer quer zur Längsrichtung des Fördergurts gerichteten Spannkraft beaufschlagt. Die Spannkraft kann leicht in Richtung der Fördergurtebene geneigt sein, so dass das Spannelement in Richtung eines oder mehrerer Widerlager gedrückt wird, die auf der dem Spannglied gegenüberliegenden Seite des Fördergurtes angeordnet sein können und z.B. durch Lehrlaufrollen gebildet werden können. Eine Komponente der Spannkraft kann dabei bei einem Kurvengurt radial nach außen gerichtet sein, so dass die Spannkraft innerhalb einer Radiusebene liegt, in welche der Radius der Kurve fällt und die senkrecht auf den Fördergurt steht.

Bei einem solche Bandförderer kann die Spannfläche an dem Zahnriemen bzw. an dem Keilriemen und/oder an einem zusätzlich zum Zahnriemen ausgebildeten Spannelement vorgesehen sein. Ein zusätzlich zum Zahnriemen bzw. Keilriemen ausgebildetes Spannelement kann einstückig mit dem Zahnriemen bzw. dem Keilriemen ausgebildet sein oder mehrstückig als separates Element, das getrennt am Fördergurt bzw. der Erstreckung ausgebildet bzw. befestigt werden kann.

Ferner kann bei einem solchen Bandförderer der Zahnriemen bzw. der Keilriemen und/oder das Spannelement auf der Innenseite des umlaufenden Fördergurts angeordnet sein. Auf der Innenseite des umlaufenden Fördergurts bedeutet auf der Seite der Umlenkwelle. Dabei können die Teile, wie bereits beschrieben mittelbar oder unmittelbar am Fördergurt, also an dem Fördergurt selber oder an der seitlichen Erstreckung des Fördergurtes angeordnet sein. Bevorzugt erfolgt die Anordnung, insbesondere des Spannelements, lediglich auf der Innenseite des umlaufenden Fördergurts mithin auf der Druckseite des Gurtes hinsichtlich der neutralen Faser. Demnach würde auf der Außenseite des Fördergurtes kein Spannelement angeordnet sein. Das Spannelement würde bei Umlaufen des Fördergurtes um die Umlenkwelle daher nicht auf Zug belastet.

Da der Fördergurt als ein Endlosgurt gestaltet ist, kann dieser einfach durch Auflegen auf die Umlenkwelle montiert werden. Ein Zusammenfügen von zwei Enden des Fördergurts kann entfallen. Darüber hinaus läuft ein derartiger Endlosgurt sanft ab und eine Verbindungsstelle kann sich nicht lösen.

Gemäß einem weiteren Gesichtspunkt wird ein Verfahren zum Montieren eines Bandförderers mit folgenden Schritten geschaffen:
Montieren einer Antriebsvorrichtung an einem Gestell oder Rahmen oder einer Basis des Bandförderers;
Einführen zumindest einer Umlenkwelle in die Gurtschleife, d.h. in das Innere eines Endlosgurts bzw. in das Innere eines Fördergurts, dessen Enden miteinander verbunden sind; und
Einhängen der zumindest einen Umlenkwelle in das Gestell bzw. den Rahmen bzw. die Basis des Bandförderers, um hierdurch die Montage des Fördergurts zu bewirken.

Da bei diesem Montageverfahren die Montage der Antriebsvorrichtung getrennt bzw. separat von der Montage des Fördergurts durchgeführt wird, ist eine Demontage der Antriebsvorrichtung beim Auswechseln des Fördergurts nicht erforderlich. Derart kann ein Austausch des Fördergurts schnell und kostengünstig durchgeführt werden.

Darüber hinaus kann auch die Antriebsvorrichtung getrennt bzw. separat von der Montage des Fördergurts montiert und demontiert werden, so daß beim Austausch der Antriebsvorrichtung der Fördergurt und die Umlenkwelle montiert bleiben können. Hierdurch ergibt sich ebenfalls ein Vorteil der Zeit- und Kostenersparnis.

Des weiteren wird gemäß einem Gesichtspunkt der Erfindung eine Antriebsvorrichtung mit einem drehend antreibbaren Zahnrad oder einer Keilriemenscheibe zum Antreiben eines Bandförderers verwendet, der wie vorher beschrieben gestaltet ist.

Die Erfindung wird nachfolgend unter Bezugnahme auf die beigefügten Zeichnungen anhand eines Ausführungsbeispiels näher erläutert.
Figur 1 zeigt eine perspektivische Ansicht des erfindungsgemäßen Bandförderers in der Gestalt eines Kurvenbandförderers, wobei ein Fördergurt demontiert ist.
Figur 2 zeigt eine Detailansicht des erfindungsgemäßen Bandförderers von Fig. 1 mit einem montierten Fördergurt.
Figur 3 zeigt eine Schnittansicht des Bandförderers mit einer weiteren Ausführungsform eines aufgelegten Fördergurts mit einem Zahnriemen und einem Spannelement.

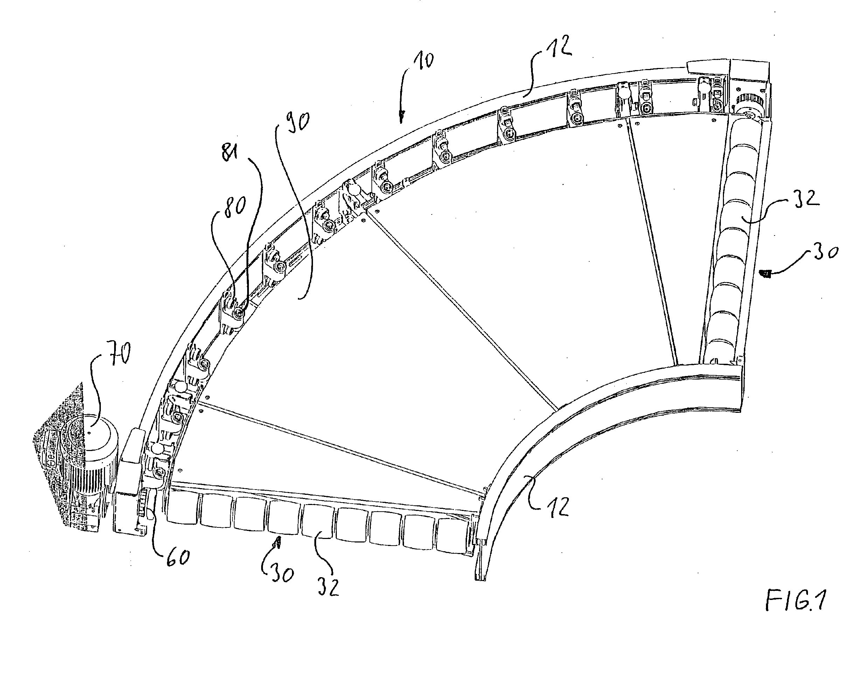

Der in Figur 1 gezeigte Kurvenbandförderer hat ein Gestell 10, das durch ein Paar Längsträger bzw. Doppel-T-Träger 12 gebildet ist. An den Enden der Doppel-T-Träger 12 ist jeweils eine Umlenkwelle 30 zum Umlenken eines (nicht gezeigten) Fördergurts angeordnet.

Diese Umlenkwelle 30 ist in das Gestell 10 eingehängt, wobei mindestens eine der zwei Umlenkwellen 30 in einer Längsrichtung bzw. einer Bewegungsrichtung des nicht gezeigten Fördergurts verschiebbar ist, um nach der Montage des Fördergurts diesen spannen zu können. Darüber hinaus weist die Umlenkwelle 30 eine Vielzahl von Walzenkörpern 32 auf, die unabhängig voneinander drehbar sind. Da der Fördergurt auf einer Innenseite, d.h. auf einer Seite mit einem geringeren Biegeradius eine geringere Umlaufgeschwindigkeit aufweist als an einer Außenseite bzw. einer Seite mit einem großen Biegeradius, muß ein auf der Innenseite angeordneter Walzenkörper 32 eine entsprechend geringere Umlaufgeschwindigkeit aufweisen als ein an der Außenseite angeordneter Walzenkörper 32.

Darüber hinaus ist an dem Gestell 10 ein Elektromotor 70 mit einem Zahnrad 60 für den Antrieb eines in Figur 1 nicht gezeigten Zahnriemens montiert. Vorzugsweise ist das Zahnrad 60 unmittelbar auf einer Abtriebswelle des Elektromotors 70 angeordnet. Die Einheit bestehend aus dem Elektromotor 70 mit dem Zahnrad 60 kann unabhängig von der Umlenkwelle 30 an dem Gestell 10 montiert bzw. demontiert werden. Andererseits kann die Umlenkwelle 30 unabhängig von der Antriebseinheit bestehend aus dem Elektromotor 70 und dem Zahnrad 60 montiert bzw. demontiert werden.

Die Antriebsvorrichtung mit dem Zahnrad 60 ist dabei vorzugsweise so positioniert oder positionierbar, daß eine Achse bzw. Drehachse des Zahnrads 60 im wesentlichen auf einer Achse bzw. Rotationsachse der Umlenkwelle 30 liegt.

Darüber hinaus weist der Bandförderer eine Vielzahl von Leerlaufrollen 80 für die Führung des (nicht gezeigten) Zahnriemens auf. Vorzugsweise sind diese Leerlaufrollen 80 in der Höhe an die Dicke des Zahnriemens angepaßt. Alternativ können die Leerlaufrollen 80 jedoch auch vertikal verschiebbar angeordnet sein, um die Montage eines Zahnriemens zu erleichtern und ihre Höhe gemäß der Dicke des Zahnriemens einstellen zu können. Ferner sind rahmenseitig eine Vielzahl von als Spannrollen 81 ausgebildeten Spanngliedern vorgesehen, die gemäß der dargestellten Ausführungsform hinsichtlich der Leerlaufrollen 80 auf der anderen Seite des in dieser Figur nicht dargestellten Fördergurts angeordnet sind.

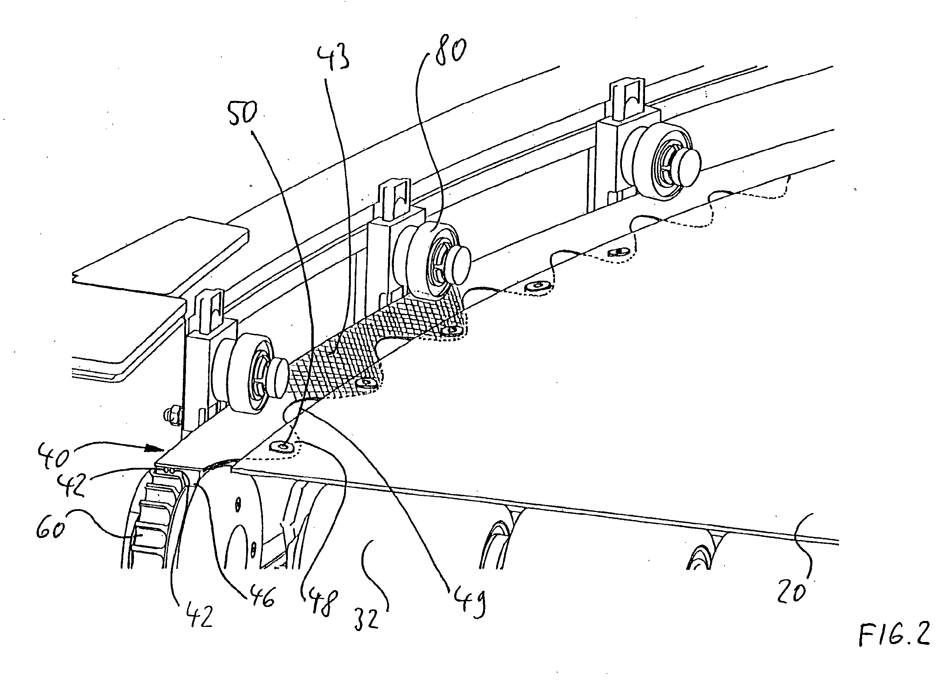

Figur 2 zeigt eine Detailansicht des Bandförderers von Figur 1, wobei in Figur 2 ein Förderband 20 und ein Zahnriemen 40 montiert sind.

Der Zahnriemen 40 ist dabei mit seiner Verzahnung 46 auf das Zahnrad 60 gelegt, um mit diesem in Eingriff zu treten. Somit wird der Zahnriemen 40 durch Antreiben des Zahnrads 60 aufgrund des Eingriffs der Zähne des Zahnrads 60 mit der Verzahnung 46 angetrieben. Hierdurch bewegt sich der Zahnriemen 40 entlang des Doppel-T-Trägers 12 des Gestells 10. Diese Bewegung des Zahnriemens 40 wird über die Laschen 48 (Erstreckung) und Nieten 50 auf den Fördergurt 20 übertragen, so daß der Fördergurt 20 auch entlang des Paars Doppel-T-Träger 12 bewegt wird.

Der Zahnriemen 40 ist dabei mit mindestens einem ersten Zugträger 42, vorzugsweise mit einem Paar-Zugträger 42 versehen, um hohe Antriebskräfte übertragen zu können, ohne den Zahnriemen übermäßig zu längen oder übermäßig zu belasten. Beim Anordnen von zwei oder mehr Zugträgern 42 sind diese vorzugsweise nebeneinander angeordnet, um sich auf sanfte Weise um das Zahnrad 60 herum zu biegen. Diese ersten Zugträger 42 sind vorzugsweise als Seil in Gleichschlag- oder Kreuzschlagausführung ausgebildet, während der Zahnriemen 40 vorzugsweise aus Polyurethan hergestellt ist.

Vorzugsweise ist des weiteren in der Erstreckung bzw. Lasche 48 eine Vielzahl zweiter Zugträger angeordnet, welche eine zweite Zugträgerlage 43 bilden können, um die Antriebskraft von dem Zahnriemen 40 auf das Förderband 20 zu übertragen. Diese zweiten Zugträger der zweiten Zugträgerlage 43 weisen vorzugsweise zumindest eine Lage gewobener Kett- und Schußfäden auf und sind vorzugsweise in einem Winkel gegenüber der Bewegungsrichtung des Zahnriemens angeordnet. Vorzugsweise in einem Winkel von 30 bis 50 Grad, am besten in einem Winkel von 40 bis 45 Grad.

Vorzugsweise stimmt die Richtung der winklig angeordneten zweiten Zugträger 43 mit einer Kraftlinie zum Einleiten der Bewegungskraft von dem Zahnriemen 40 auf den Fördergurt 20 im wesentlichen überein. Des weiteren können vorzugsweise weitere zweite Zugträger senkrecht zu den zweiten Zugträgern in Krafteinleitungsrichtung angeordnet sein. In anderen Worten gibt es zweite Zugträger 43, die in einem Winkel von 30 bis 50 Grad, d.h. in einem Winkel im wesentlichen in Übereinstimmung mit einer Krafteinleitungsrichtung angeordnet sind, und weitere zweite Zugträger 43, die gegenüber den erstgenannten zweiten Zugträgern um 90 Grad versetzt angeordnet sind. Dies hat den Vorteil, daß bei einer Umkehr der Bewegungsrichtung des Bandförderers die weiteren letztgenannten zweiten Zugträger 43 nun im wesentlichen mit der Krafteinleitungsrichtung von dem Zahnriemen 40 auf den Fördergurt 20 übereinstimmen.

Zusammenfassend kann gesagt werden, daß zweite Zugträgerlagen 43 derart angeordnet sind, daß jeweils eine Vielzahl von zweiten Zugträgern 43 in Krafteinleitungsrichtung sowohl in der einen Bewegungsrichtung des Bandförderers als auch in der entgegengesetzten Bewegungsrichtung des Bandförderers angeordnet sind.

Die Laschen bzw. Erstreckungen 48 des Zahnriemens 40 werden vorzugsweise durch Nieten 50 mit dem Fördergurt 20 verbunden. Auf diese Weise wird eine einfache und kostengünstige Verbindung zwischen dem Zahnriemen 40 und dem Fördergurt 20 geschaffen. Im Falle des Austausches des Fördergurts 20 oder des Zahnriemens 40 kann diese Verbindung auch auf einfache Weise gelöst und wiederhergestellt werden. Alternativ kann diese Verbindung auch durch ein anderes Verbindungsverfahren, wie beispielsweise Schrauben, Splinte, Kleben, Vulkanisieren etc. erfolgen.

Die Erfindung betrifft insbesondere einen Bandförderer mit einem um zumindest eine Umlenkwelle 30 geführten Fördergurt 20 und einer Antriebsvorrichtung zum Bewegen des Fördergurts 20, wobei die Antriebsvorrichtung vorzugsweise getrennt oder separat von der Umlenkwelle 30 angeordnet ist. Die Antriebsvorrichtung umfaßt vorzugsweise einen an einem Randabschnitt des Fördergurts 20 angeordneten oder anordenbaren Zahnriemen 40 und ein drehend antreibbares Zahnrad 60. Dabei ist der Zahnriemen 40 vorzugsweise lösbar mit dem Fördergurt 20 verbunden oder verbindbar.

Mit dem in den Figuren gezeigten Kurvenbandförderer können Gegenstände um einen beliebigen Winkel gefördert werden. An der radial innenliegenden Flanke des Zahnriemens können vorzugsweise (nicht gezeigte) Spannmittel wie beispielsweise eine Kurvenführung angreifen, um den Zahnriemen um die Kurve herum zu führen.

Die Erfindung ist jedoch nicht auf den gezeigten Kurvenbandförderer beschränkt, sondern kann auch bei einem geradlinigen Bandförderer angewandt werden. Darüber hinaus kann die Antriebsvorrichtung mit dem Zahnrad 60 und dem Zahnriemen 40 im Falle eines Kurvenbandförderers auch an der Innenseite oder an beiden Seiten des Förderbands 20 angeordnet werden. Des weiteren kann anstelle des Elektromotors 70 jede andere Antriebsvorrichtung wie beispielsweise ein Hydraulikmotor, ein Servomotor, ein Verbrennungsmotor etc. zum Antrieb des Bandförderers verwendet werden. Das Gestell 10 muß nicht die Doppel-T-Träger 12 aufweisen, sondern es kann jede andere Art eines Gestells beispielsweise ein einfacher T-Träger, ein L-Träger, eine Stange oder ein Rohr zum Ausbilden des Gestells verwendet werden. Optional kann der Bandförderer mit Führungsplatten 90 versehen sein, die ebenfalls leicht lösbar mit dem Gestell 10 zu verbinden sind. Obwohl gemäß dem Ausführungsbeispiel ein um ein Zahnrad gelegter Zahnriemen als Antrieb angewandt wird, kann auch ein Keilriemen mit einer entsprechenden Keilriemenscheibe zur Anwendung kommen.

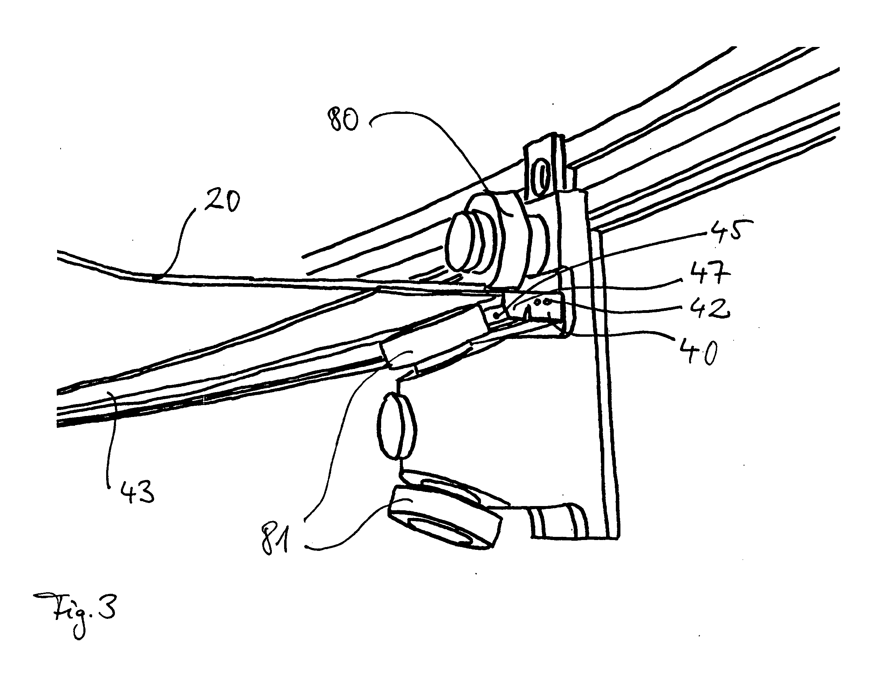

Figur 3 zeigt eine Schnittansicht des Bandförderers mit einer weiteren Ausführungsform eines aufgelegten Fördergurts 20 mit einem Zahnriemen 40 und einem Spannelement 47. Das Spannelement 47 und der Zahnriemen 40 sind in dieser Ausführungsform auf der Innenseite des umlaufenden Fördergurtes 20 angeordnet, also auf der Seite der in Figur 3 nicht dargestellten Umlenkwelle.

Das Spannelement 47 ist in dieser Ausführungsform zusätzlich zum Zahnriemen mit der Verzahnung 46 ausgebildet und von diesem durch einen Spalt getrennt, der sich zwischen der Verzahnung 46 und dem Spannelement 47 in Richtung der Erweiterung erstreckt, die an dem Fördergurt 20 befestigt ist. Der Spalt teilt den Zahnriemen und das Spannelement 47 in dieser Ausführungsform nicht vollständig, so dass die beiden Elemente vorliegend einstückig ausgebildet sind, so dass nur ein einstückiges Bauteil an der Erweiterung des Fördergurtes 20 befestigt zu werden braucht. Ferner ist in dieser Ausführungsform ebenfalls ein erster Zugträger 42 dargestellt.

Denkbar ist ebenfalls, dass der Zahnriemen bzw. ein an Stelle des Zahnriemens vorgesehener Keilriemen vollständig von dem Spannelement 47 getrennt also mehrstückig vorgesehen ist. In diesem Fall kann die Verzahnung z.B. auf der Außenseite des Fördergurtes angeordnet werden. Aufgrund der Verzahnung könnten Zugspannungen im Zahnriemen 40 auch bei einer Anordnung auf der Außenseite gering gehalten werden. Vorteilhaft ist es jedoch, wenn zumindest das Spannelement 47, welches eine gewisse durchgehende Bauhöhe aufweisen sollte, um eine ausreichend große Spannfläche 45 bereitstellen zu können, auf der Innenseite des Fördergurtes 20 angeordnet wird. Bei einer Anordnung auf der Innenseite liegt das Spannelement 47 innerhalb der umlaufenden neutralen Faser des Gurtbandes, also der Faser des Gurtbandes, die beim Umlaufen des Gurtes um die Umlenkwelle weder mit einer Zugspannung noch mit einer Druckspannung belastet wird. Bevorzugt ist auf der Außenseite des Fördergurtes jedoch weder ein Spannelement 47 noch ein Zahnriemen 40 vorgesehen, um die Breite des Gurtes vollständig für Fördergüter nutzen zu können.

Gemäß noch einer weiteren (nicht dargestellten) Ausführungsform kann die Spannfläche 45 auch als Flanke des Zahnriemens 40 ausgebildet sein, so dass eine Breitenerstreckung des Bauelements reduziert werden kann.

Wie in Figur 3 ersichtlich ist, steht die Spannfläche 45 der dargestellten Ausführungsform mit einem rahmenseitigen Spannglied in Kontakt. Das rahmenseitige Spannglied ist als Spannrolle 81 ausgebildet, die in dieser Ausführungsform ähnlich oder identisch zu den Leerlaufrollen 80 ausgestaltet ist. Die Spannrollen 81 sind leicht schräg gestellt um die Spannfläche 45 des Spannelelements 47 mit einer radial nach außen und schräg nach oben gerichteten Spannkraft zu beaufschlagen. So kann das Spannelement 47 den Fördergurt 20 radial nach außen spannen. Zusätzlich wird die Rückseite des Zahnriemens 40 bzw. eine zwischen Zahnriemen 40 und Leerlaufrolle 80 angeordnete zweite Zugträgerlage 43 an die Leerlaufrolle 80 gedrückt und so sicher zwischen Leerlaufrolle 80 und Spannrolle 81 geführt. Die Leerlaufrolle 80 steht im Wesentlichen Senkrecht auf der Fördergurtebene. Spannkräfte werden daher unter Vernachlässigung von Reibungskräften an der Leerlaufrolle 80 fast ausschließlich über die Spannrollen 81 aufgebracht. Durch die senkrechte Stellung der Leerlaufrollen 80 kann die Breite des Förderbandes optimal genutzt werden.

In der Figur 3 ist unterhalb der beschriebenen Spannrolle 81 eine optionale zweite Spannrolle 81 vorgesehen, welche in gleicher Weise zur Spannung und Führung des rücklaufenden Untertrums dienen kann.

### Bezugszeichenliste

- 10: Gestell
- 12: Doppel-T-Profil
- 20: Fördergurt
- 30: Umlenkwelle
- 32: Walzenkörper
- 40: Zahnriemen
- 42: erster Zugträger
- 43: zweite Zugträgerlage
- 45: Spannfläche
- 46: Verzahnung
- 47: Spannelement
- 48: Lasche
- 49: Aussparung
- 50: Niete
- 60: Zahnrad
- 70: Elektromotor
- 80: Leerlaufrolle
- 81: Spannrolle
- 90: Führungsplatte

## Patentansprüche

1. Bandförderer mit einem um zumindest eine Umlenkwelle (30) geführten Fördergurt (20), um ein Obertrum und ein Untertrum zu bilden, und einer Antriebsvorrichtung zum Bewegen des Fördergurts (20), wobei die Antriebsvorrichtung separat von der Umlenkwelle (30) montiert ist, und wobei
die Antriebsvorrichtung den Fördergurt (20) im Bereich einer Umlenkung zwischen Obertrum und Untertrum antreibt **dadurch gekennzeichnet, dass** die Umlenkwelle (30) eine Vielzahl von nebeneinander angeordneten Walzenkörpern (32) aufweist, die unabhängig voneinander drehbar sind, oder als konische Umlenkwelle ausgebildet ist.

2. Bandförderer nach Anspruch 1, wobei die Antriebsvorrichtung ein drehend antreibbares Zahnrad (60) oder eine Keilriemenscheibe umfaßt, das/die mit einem an einem Randabschnitt des Fördergurts (20) angeordneten Zahnriemen (40) bzw. Keilriemen in Eingriff ist oder in Eingriff bringbar ist und vorzugsweise mit einem Elektromotor (70) gekoppelt ist.

3. Bandförderer nach einem der vorherigen Ansprüche, wobei die Umlenkwelle (30) separat von dem Zahnrad (60) bzw. der Keilriemenscheibe demontierbar ist.

4. Bandförderer nach einem oder mehreren der vorherigen Ansprüche, wobei die zumindest eine Umlenkwelle (30) durch Einhängen in ein Gestell (10) des Bandförderers anordenbar ist und vorzugsweise zum Spannen des Fördergurts (20) in einer Längsrichtung des Fördergurts (20) verschiebbar und/oder fixierbar ist.

5. Bandförderer nach einem oder mehreren der vorherigen Ansprüche, wobei die zumindest eine Umlenkwelle (30) an zumindest einem Ende einer Gurtkurve anordenbar oder angeordnet ist.

6. Bandförderer mit einem um zumindest eine Umlenkwelle (30) geführten Fördergurt (20) und einer Antriebsvorrichtung zum Bewegen des Fördergurts (20), vorzugsweise nach einem oder mehreren der vorherigen Ansprüche, wobei der Fördergurt einen Zahnriemen (40) oder Keilriemen aufweist, der mit der Antriebsvorrichtung in Eingriff steht und lösbar mit dem Fördergurt (20) verbunden oder verbindbar ist.

7. Bandförderer nach einem oder mehreren der vorherigen Ansprüche 2 bis 6, wobei der Zahnriemen (40) oder Keilriemen eine seitliche Erstreckung aufweist, die mit dem Fördergurt (20) verbunden oder verbindbar ist.

8. Bandförderer nach Anspruch 7, wobei die seitliche Erstreckung eine Vielzahl von Laschen (48) aufweist, die durch Aussparungen (49) voneinander getrennt sind und mit dem Fördergurt (20) vorzugsweise durch Niete (50) verbindbar oder verbunden sind.

9. Bandförderer nach einem oder mehreren der vorherigen Ansprüche 2 bis 8, wobei der Zahnriemen (40) oder Keilriemen zumindest eine vorzugsweise in seinem Inneren angeordnete erste Zugträgerlage (42) aufweist, die längs zu einer Bewegungsrichtung des Zahnriemens (40) angeordnet ist.

10. Bandförderer nach einem oder mehreren der vorherigen Ansprüche 2 bis 9, wobei der Zahnriemen (40) oder Keilriemen zumindest eine zweite Zugträgerlage (43) aufweist, die in einem Winkel von 30° bis 50° gegenüber der Bewegungsrichtung des Zahnriemens (40) bzw. des Keilriemens angeordnet ist, wobei vorzugsweise die zweite Zugträgerlage (43) sich in die seitliche Erstreckung und/oder die Laschen (48) hinein erstreckt.

11. Bandförderer nach einem oder mehreren der vorherigen Ansprüche 9 bis 10, wobei die erste Zugträgerlage (42) ein Seil in Gleichschlag- oder Kreuzschlagausführung aufweist und die zweite Zugträgerlage (43) zumindest eine Lage gewobene Kett- und Schußfäden aufweist.

12. Bandförderer nach einem oder mehreren der vorherigen Ansprüche, wobei der Fördergurt (20) ein Endlosgurt ist.

13. Bandförderer nach einem oder mehreren der Ansprüche 6 bis 12, wobei an dem Fördergurt (20) oder an der seitlichen Erstreckung eine Spannfläche vorgesehen ist, die mit einem rahmenseitigen Spannglied in Kontakt steht, welches die Spannfläche mit einer quer zur Längsrichtung des Fördergurts (20) gerichteten Spannkraft beaufschlagt.

14. Bandförderer nach Anspruch 13, wobei die Spannfläche an dem Zahnriemen (40) oder Keilriemen und/oder an einem zusätzlich zum Zahnriemen (40) ausgebildeten Spannelement vorgesehen ist.

15. Bandförderer nach Anspruch 13 oder 14, wobei der Zahnriemen (40), der Keilriemen und/oder das Spannelement auf der Innenseite des umlaufenden Fördergurts angeordnet sind.

16. Verfahren zum Montieren eines Bandförderers nach einem oder mehreren der vorherigen Ansprüche mit den Schritten:
Montieren einer Antriebsvorrichtung an einem Gestell (10) des Bandförderers;
Einführen zumindest einer Umlenkwelle (30) in die Gurtschleife; und
Einhängen der zumindest einen Umlenkwelle (30) in das Gestell (10).

17. Verwendung einer Antriebsvorrichtung mit einem drehend antreibbaren Zahnrad (60) oder einer Keilriemenscheibe zum Antreiben eines Bandförderers nach einem oder mehreren der vorherigen Ansprüche 1 bis 15.

## Claims

1. A belt conveyor with a conveyor belt (20), which is guided around at least one return shaft (30) to form an upper run and a lower run, and a drive device for moving the conveyor belt (20), wherein the drive device is mounted separately from the return shaft (30) and wherein the drive device drives the conveyor belt (20) in the area of a deflection between the upper run and the lower run, **characterized in that** the return shaft (30) comprises a plurality of roll bodies (32), which are arranged next to each other and which can be rotated independently from each other, or is formed as a conical return shaft.

2. The belt conveyor according to claim 1, wherein the drive device comprises a rotatably drivable gear (60) or a V-belt pulley, which is engaged or engageable with a toothed belt (40) arranged on an edge portion of the conveyor belt (20) and which is preferably coupled to an electric motor (70).

3. The belt conveyor according to one of the preceding claims, wherein the return shaft (30) can be demounted separately from the gear (60) or the V-belt pulley.

4. The belt conveyor according to one or more of the preceding claims, wherein the at least one return shaft (30) is arrangeable by being hung in a frame (10) of the belt conveyor and is preferably shiftable and/or fixable in a longitudinal direction of the belt conveyor (20) to tension the conveyor belt (20).

5. The belt conveyor according to one or more of the preceding claims, wherein the at least one return shaft (30) is arrangeable or arranged on at least one end of a belt curve.

6. The belt conveyor with a conveyor belt (20), which is guided around at least one return shaft (30), and a drive device for moving the conveyor belt (20), preferably according to one or more of the preceding claims, wherein the conveyor belt comprises a toothed belt (40) or V-belt engaged with the drive device and releasably connected or connectable to the conveyor belt (20).

7. The belt conveyor according to one or more of the preceding claims 2 to 6, wherein the toothed belt (40) or V-belt has a lateral extension connected or connectable to the conveyor belt (20).

8. The belt conveyor according to claim 7, wherein the lateral extension has a plurality of tabs (48), which are separated from each other by recesses (49) and which are connectable or connected to the conveyor belt (20) preferably by rivets (50).

9. The belt conveyor according to one or more of the preceding claims 2 to 8, wherein the toothed belt (40) or V-belt comprises at least a first tension-bearing member layer (42) preferably arranged in the interior thereof, which is arranged lengthwise to a movement direction of the toothed belt (40).

10. The belt conveyor according to one or more of the preceding claims 2 to 9, wherein the toothed belt (40) or V-belt comprises at least a second tension-bearing member layer (43) arranged at an angle of 30° to 50° with respect to the movement direction of the toothed belt (40) or V-belt, wherein preferably the second tension-bearing member layer (43) extends into the lateral extension and/or tabs (48).

11. The belt conveyor according to one or more of the preceding claims 9 to 10, wherein the first tension-bearing member layer (42) comprises a regular lay or Lang's lay rope and the second tension-bearing member layer (43) at least one layer of woven warp and weft threads.

12. The belt conveyor according to one or more of the preceding claims, wherein the conveyor belt (20) is an endless belt.

13. The belt conveyor according to one or more of the preceding claims 6 to 12, wherein a clamping surface is provided on the conveyor belt (20) or on the lateral extension, which is in contact with a frame-side clamping member that applies a clamping force directed transversely to the longitudinal direction of the conveyor belt (20) to the clamping surface.

14. The belt conveyor according to claim 13, wherein the clamping surface is provided on the toothed belt (40) or V-belt and/or on a clamping element formed in addition to the toothed belt (40).

15. The belt conveyor according to claim 13 or 14, wherein the toothed belt (40), the V-belt and/or the clamping element is/are arranged on the inner side of the continuous conveyor belt.

16. A method for mounting a belt conveyer according to one or more of the preceding claims, with the steps of:
mounting a drive device on a frame (10) of the belt conveyor;
introducing at least one return shaft (30) into the belt loop; and
hanging the at least one return shaft (30) in the frame (10).

17. A use of a drive device with a rotatably drivable gear (60) or a V-belt pulley for driving a belt conveyor according to one or more of the preceding claims 1 to 15.

## Revendications

1. Transporteur à courroie comprenant une courroie de transport (20) guidée autour d'au moins un arbre de renvoi (30) pour former un brin supérieur et un brin inférieur, et un dispositif d'entraînement pour déplacer la courroie de transport (20), dans lequel le dispositif d'entraînement est monté séparément de l'arbre de renvoi (30), et dans lequel
le dispositif d'entraînement entraîne la courroie de transport (20) dans la région d'un coudage entre brin supérieur et brin inférieur, **caractérisé en ce que** l'arbre de renvoi (30) présente une pluralité de corps de rouleau (32) disposés les uns à côté des autres qui peuvent tourner indépendamment les uns des autres ou est réalisé en tant qu'arbre de renvoi conique.

2. Transporteur à courroie selon la revendication 1, dans lequel le dispositif d'entraînement comprend une roue dentée (60) pouvant être entraînée à rotation ou un disque à courroie trapézoïdale qui est en engagement ou peut être amené(e) en engagement avec une courroie dentée (40) ou courroie trapézoïdale disposée sur une section de bord de la courroie de transport (20) et est de préférence raccordé(e) à un moteur électrique (70).

3. Transporteur à courroie selon l'une quelconque des revendications précédentes, dans lequel l'arbre de renvoi (30) peut être démonté séparément de la roue dentée (60) ou du disque à courroie trapézoïdale.

4. Transporteur à courroie selon une ou plusieurs des revendications précédentes, dans lequel l'au moins un arbre de renvoi (30) peut être disposé par suspension dans un bâti (10) du transporteur à courroie et peut être déplacé et/ou peut être fixé de préférence pour le serrage de la courroie de transport (20) dans une direction longitudinale de la courroie de transport (20).

5. Transporteur à courroie selon une ou plusieurs des revendications précédentes, dans lequel l'au moins un arbre de renvoi (30) peut être disposé ou est disposé à au moins une extrémité d'une came de courroie.

6. Transporteur à courroie comprenant une courroie de transport (20) guidée autour d'au moins un arbre de renvoi (30) et un dispositif d'entraînement pour déplacer la courroie de transport (20), de préférence selon une ou plusieurs des revendications précédentes, dans lequel la courroie de transport présente une courroie dentée (40) ou courroie trapézoïdale qui est en engagement avec le dispositif d'entraînement et est reliée ou peut être reliée de manière amovible à la courroie de transport (20).

7. Transporteur à courroie selon une ou plusieurs des revendications précédentes 2 à 6, dans lequel la courroie dentée (40) ou courroie trapézoïdale présente un prolongement latéral qui est relié ou peut être relié à la courroie de transport (20).

8. Transporteur à courroie selon la revendication 7, dans lequel le prolongement latéral présente une pluralité de colliers de fixation (48) qui sont séparés les uns des autres par des évidements (49) et peuvent être reliés ou sont reliés à la courroie de transport (20) de préférence par des rivets (50).

9. Transporteur à courroie selon une ou plusieurs des revendications précédentes 2 à 8, dans lequel la courroie dentée (40) ou courroie trapézoïdale présente au moins une première couche de traverse (42) disposée de préférence dans sa partie intérieure qui est disposée longitudinalement à une direction de déplacement de la courroie dentée (40).

10. Transporteur à courroie selon une ou plusieurs des revendications précédentes 2 à 9, dans lequel la courroie dentée (40) ou courroie trapézoïdale présente au oins une seconde couche de traverse (43) qui est disposée à un angle de 30° à 50° par rapport à la direction de déplacement de la courroie dentée (40) ou de la courroie trapézoïdale, dans lequel la seconde couche de traverse (43) s'étend de préférence jusque dans le prolongement latéral et/ou les colliers de fixation (48).

11. Transporteur à courroie selon une ou plusieurs des revendications précédentes 9 à 10, dans lequel la première couche de traverse (42) présente un câble en version commettage tordu simple ou commettage croisé et la seconde couche de traverse (43) présente au moins une couche de fils de chaîne et de trame tissés.

12. Transporteur à courroie selon une ou plusieurs des revendications précédentes, dans lequel la courroie de transport (20) est une courroie sans fin.

13. Transporteur à courroie selon une ou plusieurs des revendications 6 à 12, dans lequel une face de serrage est prévue sur la courroie de transport (20) ou sur le prolongement latéral, laquelle est en contact avec un organe de serrage côté châssis qui sollicite la face de serrage avec une force de serrage orientée transversalement à la direction longitudinale de la courroie de transport (20).

14. Transporteur à courroie selon la revendication 13, dans lequel la face de serrage est prévue sur la courroie dentée (40) ou courroie trapézoïdale et/ou sur un élément de serrage réalisé en plus de la courroie dentée (40).

15. Transporteur à courroie selon la revendication 13 ou 14, dans lequel la courroie dentée (40), la courroie trapézoïdale et/ou l'élément de serrage sont disposés sur le côté interne de la courroie de transport rotative.

16. Procédé de montage d'un transporteur à courroie selon une ou plusieurs des revendications précédentes, comprenant les étapes de :
montage d'un dispositif d'entraînement sur un bâti (10) du transporteur à courroie ;
introduction d'au moins un arbre de renvoi (30) dans la boucle de courroie ; et
suspension de l'au moins un arbre de renvoi (30) dans le bâti (10).

17. Utilisation d'un dispositif d'entraînement avec une roue dentée (60) pouvant être entraînée à rotation ou un disque à courroie trapézoïdale pour l'entraînement d'un transporteur à courroie selon une ou plusieurs des revendications précédentes 1 à 15.
